# EUROPEAN PATENT APPLICATION

(11) **EP 3 034 559 A1**
(43) Date of publication of application: **22.06.2016**
(21) Application number: 14198368.4
(22) Date of filing: 16.12.2014
(51) Int. Cl.: C08L 81/00, B32B 27/00, C08J 5/00, C08K 3/00, C08K 5/00, C08L 81/06

(54) **Polyethersulphone compositions**

(71) Applicant: 3M Innovative Properties Company, St. Paul, MN 55133-3427 (US)
(72) Inventor: Jinks, Philip, Loughborough, Leicestershire LE11 3JS (GB)
(74) Representative: Bergen, Katja

(57) **Abstract**

Compositions comprising polyethersulphone and a solvent are described. The polyethersulphone is in solution in the solvent and the solvent comprises a cyclopentanone. Methods for applying such compositions to a substrate, and articles comprising a substrate having a surface and a coating of polyethersulphone on the surface of the substrate are also described.

## Description

### FIELD

The present disclosure relates to compositions comprising polyethersulphone and a solvent comprising cyclopentanone, methods for applying such compositions to a substrate, and articles having a coating comprising polyethersulphone.

### SUMMARY

Briefly, in one aspect, the present disclosure provides a composition comprising polyethersulphone and a solvent comprising cyclopentanone, wherein the polyethersulphone is in solution in the solvent. In some embodiments, the solvent comprises at least 70% by volume, e.g., greater than 90 % by volume, cyclopentanone, based on the total volume of solvent. In some embodiments, the solvent comprises less than 5 volume % of a linear aliphatic ketone, based on the total volume of solvent.

In some embodiments, the solvent has a Hildebrand Solubility Parameter at 25 ° C of greater than 20.5 MPa^{0.5}, e.g., at least 21 MPa^{0.5}. In some embodiments, the solvent has a Hildebrand Solubility Parameter at 25 °C of less than 22.4 MPa^{0.5}, e.g., no greater than 22 MPa^{0.5}. In some embodiments, the solvent has a Hildebrand Solubility Parameter at 25 ° C of at least 21 MPa^{0.5} and no greater than 22 MPa^{0.5}.

In some embodiments, the polyethersulphone is in solution in the solvent in an amount of at least 9 weight %, based on the total weight of the composition. In some embodiments, the polyethersulphone is in solution in the solvent in an amount of less than 20 weight %, based on the total weight of the composition.

In another aspect, the present disclosure provides a method for applying a composition to a substrate, the method comprising contacting a surface of a substrate with any of the compositions described or otherwise disclosed herein; and removing at least a portion of the solvent. In some embodiments, the method comprising providing a casting medium as the substrate, contacting a surface of the casting medium with the composition, drying the composition to remove at least a portion of the solvent and, optionally removing the casting medium.

In yet another aspect, the present disclosure provides an article prepared by the methods described or otherwise disclosed herein.

The above summary of the present disclosure is not intended to describe each embodiment of the present invention. The details of one or more embodiments of the invention are also set forth in the description below. Other features, objects, and advantages of the invention will be apparent from the description and from the claims.

### DETAILED DESCRIPTION

Polysulphones are known as having good heat resistance, dimensional stability and flame retardance. Coating materials and films of polysulphone are often produced from a solution of the polysulphone. Unfortunately, it has proven difficult to find a simple solvent system that is generally applicable for polysulphones. For example, USA-2004/0081846 discloses a polysulphone resin solution, but requires using a three-component solvent system. In addition, there is a need for solvent systems that meet various environmental, health, and safety concerns.

One polysulphone, polyethersulphone, finds use in coating materials, paints and films. In some embodiments, polyethersulphone is particularly advantageous because of its excellent mechanical and chemically resistant properties. Polyethersulphone contains primarily repeating units of the formula (1) below capped by end groups.

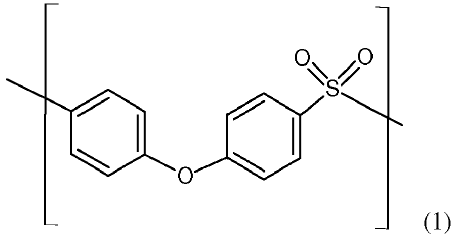

The present disclosure accordingly provides a composition comprising polyethersulphone and a solvent, wherein the polyethersulphone is in solution in the solvent. As used herein, "solvent" refers to both a single solvent as well as combinations of two or more solvents.

The polyethersulphone may be combined with other polymeric materials, such as polyphenylsulphones, or a fluoropolymer, e.g., PTFE, FEP or PFA. However, in some embodiments, it may be preferred not to include a fluoropolymer. In some embodiments, the polyethersulphone compositions may consist essentially of a polyethersulphone and a solvent, wherein the polyethersulphone is in solution in the solvent. In some embodiments, the composition may comprise at least 80%, e.g., at least 90%, at least 95% or even at least 99% polyethersulphone based on the total weight of polymeric materials present in the composition.

In some embodiments, there will be greater than 1 weight % polyethersulphone in solution, for example, greater than 2 weight %, greater than 3 weight %, or even greater than 5 weight % polyethersulphone in solution, each of these percentages based on the total weight of composition. In some embodiments, the polyethersulphone may be in solution in the solvent in an amount of at least 9 weight %, more preferably at least 12 weight % , each of the percentages based on the total weight of the composition. In some embodiments, the polyethersulphone may be in solution in the solvent in an amount of less than 20 weight %, less than 18 weight %, less than 17.5 weight %, or even less than 15 weight %, each of these percentages based on the total weight of the composition. Thus, in some embodiments, preferred ranges of polyethersulphone in solution (all in weight % based upon the total weight of the composition) are: 1 to 20, 2 to 20, 3 to 20, 5 to 20, 1 to 18, 2 to 18, 3 to 18, 5 to 18, 1 to 17.5, 2 to 17.5, 3 to 17.5, 5 to 17.5, 1 to 15, 2 to 15, 3 to 15, 5 to 15, 1 to 10, 2 to 10, 3 to 10, and 5 to 10.

Generally, the solvent comprises cyclopentanone. As used herein, the term "cyclopentanone" refers to unsubstituted cyclopentanone as illustrated by Formula 2:

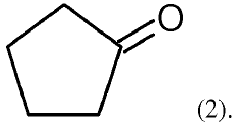

Thus, in some aspects, the present disclosure provides a composition comprising polyethersulphone and a solvent, wherein the polyethersulphone is dissolved in the solvent and the solvent comprises cyclopentanone. Other components may or may not be deliberately added to the solvent. Thus, in some embodiments, the solvent may consist essentially of cyclopentanone.

In some embodiments, the solvent comprises cyclopentanone in an amount of at least 70 % by volume, based in the total volume of the solvent. For example, in some embodiments, the solvent may comprise cyclopentanone in an amount of greater than 71 % by volume, e.g., greater than 75 % and even greater than 80 % by volume, based on the total volume of solvent. In some embodiments, the solvent will comprise cyclopentanone in large excess for example greater than 85 % by volume, e.g., greater than 90%, greater than 95%, or even greater than 99% by volume, each of these percentages based on the total volume of solvent.

In some embodiments, the cyclopentanone may be combined with a miscible cosolvent. In some embodiments, the cosolvent may include a cyclic or heterocyclic ketone, e.g., an aliphatic, cyclic or heterocyclic ketone. For example, in some embodiments, the cosolvent may comprise cyclohexanone.

In some embodiments, the cosolvent may be a 5-membered cyclic or heterocyclic ketone, e.g., a 5-membered aliphatic, cyclic or heterocyclic ketone. In some embodiments, the 5-membered, aliphatic, heterocyclic ketone is saturated. The 5-membered, aliphatic, heterocyclic ketone may include an oxygen atom, a nitrogen atom or a sulphur atom. An example of one with an oxygen atom is γ-butyrolactone. Examples with a nitrogen atom include a pyrrolidone, such as a 2- pyrrolidone. For those with a sulphur atom, an example is tetrahydrothiophenone or a derivative thereof. The 5-membered, aliphatic, heterocyclic ketone may have more than one non-carbon atom in the ring, such as an oxazolidinone, a thiazolidonone, or an imidazolinone.

In some embodiments, the 5-membered, aliphatic, heterocyclic ketone, e.g., a saturated heterocyclic ketone, may be substituted with an alkyl group including such containing one or more heteroatoms. In some embodiments, the alkyl group may contain up to ten carbon atoms. Examples include alkyl substituted 2- pyrrolidone, for example N-alkyl-2-pyrrolidone, e.g., N-methyl-2-pyrrolidone.

In some embodiments, the cosolvent may be a substituted cyclopentanone. In some embodiments, the substituted cyclopentanone may be substituted with alkyl groups such as 2-methyl-cyclopentanone, 3-methyl-cyclopentanone, and 2-ethyl-cyclopentanone. Generally, the alkyl group may contain up to ten carbon atoms. In some embodiments, the substituted cyclopentanones may be substituted with groups containing one or more heteroatoms, such as 2-[1-(5-methyl-2-furyl)butyl]cyclopentanone.

In some embodiments, the cosolvent may be a linear aliphatic ketone. However, the present inventors have discovered that linear aliphatic ketones are not required to obtain solubility in compositions containing polyethersulphone. In some embodiments, the presence of linear aliphatic ketones may hinder the solubility of polyethersulphone. Therefore, in some embodiments, the solvent comprises less than 20 volume %, e.g., less than 10 volume % of a linear aliphatic ketone, based on the total volume of solvent. In some embodiments, the solvent comprises less than 5 volume % of a linear aliphatic ketone, e.g., in some embodiments less than 4 volume %, or even less than 1 volume % of a linear aliphatic ketone, each of these percentages based on the total volume of solvent.

### Solubility Parameter

As long as the solvent comprises cyclopentanone, the Hildebrand Solubility Parameter (HSP) may be used to assist in the selection of suitable solvents. Hildebrand Solubility Parameter is a well-known parameter, calculated as the square root of the cohesive energy density of the solvent, where the cohesive energy density is the molar internal energy of vaporization divided by the molar volume. Suitable values may be obtained from Burrell, H., Solubility parameter values, in Polymer Handbook, Brandrup, J. and Immergut, E. H., Eds., John Wiley & Sons-Interscience, New York, 1966, IV-341 (wherein the reference temperature is 25 °C). For mixtures, Hildebrand Solubility Parameter may be calculated by weighting the individual solubility parameters of the constituents according to their volume fraction in the solvent mixture.

In some embodiments, the solubility parameter of the solvent mixture at a reference temperature of 25 °C is greater than 20.5, e.g., at least 20.8, or even at least 21 MPa^{0.5}. In some embodiments, the solubility parameter of the solvent mixture at a reference temperature of 25 °C is less than 22.4, e.g., no greater than 22.2, or even no greater than 22 MPa^{0.5}. In some embodiments, the solubility parameter of the solvent mixture at a reference temperature of 25 °C is in the range of 20.5 to 22.4 MPa^{0.5}, inclusive (i.e., at least 20.5 MPa^{0.5} and no greater than 22.4 MPa^{0.5}). In some embodiments, the solubility parameter of the solvent mixture at a reference temperature of 25 °C is in the range of 21 to 22 MPa^{0.5}, inclusive.

In some embodiments, compositions according to the present disclosure find particular use in coating substrates or in casting films of polyethersulphone. Thus, in another aspect, the present disclosure provides methods for applying compositions to a substrate, the methods comprising contacting the substrate with any of the polyethersulphone compositions as discussed or otherwise disclosed herein. The contacting may comprise coating by any known methods including, e.g., spraying, brushing, dipping or pouring the polyethersulphone composition; and removing at least a portion of the solvent by, e.g., drying. If spraying is employed, it may require separate stages of spraying in different directions relative to the articles to be coated, to allow effective coverage of differently orientated surfaces. Optionally, the coating may subsequently be heated to enhance the flow of the coating composition across the surface of the substrate and/or to drive off solvent. In some embodiments, the resulting polyethersulphone coating is typically in the range 1 µm (microns) to 100 µm thick. In some embodiments, the coating thickness is in the range 1 µm to 25 µm.

In a further aspect, the present disclosure provides methods of casting a film of polyethersulphone, the methods comprising contacting the casting medium with a polyethersulphone composition as discussed or otherwise disclosed herein, and removing at least a portion of the solvent by e.g., drying the composition. Optionally, the method may include removing the casting medium. It may be advantageous if the casting medium is of low adhesion to polyethersulphone to aid removal.

A particularly advantageous use of polyethersulphone compositions according to the present disclosure is in coating substrates to provide corrosion resistant coatings. Such corrosion resistance results from the coating being impermeable to corrosive species, e.g. acids, and by being perforation free. In some embodiments, in use, the substrate can be dented severely, and yet surprisingly maintain the impermeable and perforation free characteristics of the coating. Substrates include containers (including the lids) and in particular containers that may contain medicaments. Substrates may be any suitable material, for example metal, plastics, or glass.

In some embodiments, a container having a surface, e.g., an inner surface, may be coated with a composition comprising polyethersulphone. In some embodiments, the container may be a medicament container, for example a canister for use in a metered dose inhaler. In some embodiments, the surfaces that will come into contact with medicament are thus coated, and it may be economical to avoid coating surfaces that are not contacted by medicament in use, such as surfaces external to the seal between the ferrule and the canister. In some embodiments, at least part of a ferrule that is used to fasten a metering valve to the canister may have the coating applied.

Metered dose inhalers may contain non-CFC propellant-based medicament formulations. The non-CFC propellant-based formulations typically comprise HFA134a (1,1,1,2-tetrafluoroethane) or HFA 227ea (1,1,1,2,3,3,3-heptafluoropropane) or mixtures thereof. Formulations may either contain the drug in solution or in suspension, or both if there is more than one drug. Many such formulations contain ethanol as a cosolvent or co-suspending aid. Some also contain glycerol, and formulations may also include a surfactant e.g. oleic acid, polyvinylpyrrolidone, polyethylene glycol. Other excipients such as flavorings are possible.

Some formulations contain an acid and/or added water to help protect dissolved drugs from undergoing chemical degradation. The acid may be an organic acid e.g. ascorbic acid, citric acid, or a mineral acid e.g. hydrochloric acid.

Non-CFC propellant-based formulations in pressurized metered dose inhalers may render the container of the product susceptible to corrosion or catalytic degradation of the drug. In such instances to eliminate such instabilities, containers coated with polyethersulphone in accordance with various aspects of the present disclosure are particularly suitable. In addition to providing corrosion protection, the polyethersulphone coating affords suitable low levels of extractables into contained non-CFC propellant-based medicament formulations.

Certain illustrative embodiments of the present disclosure are illustrated by the following Examples.

### EXAMPLES

The solubility properties of polyethersulphone (PES) were evaluated in solvents. The polyethersulphone was VERADEL polyethersulphone ex Solvay grade A-304 P NT lot M2025B. Descriptions of various solvents used are summarized in Table 1.

**Table 1: Solvent properties.**

| Solvent | Density (g/ml) | HSP (MPa^{1/2}) |
|---|---|---|
| cyclopentanone | 0.95 | 21.3 |
| cyclohexanone | 0.95 | 20.3 |
| cycloheptanone | 0.95 | 20.0 |
| methylethyl ketone (MEK) | 0.80 | 19.0 |
| methylisobutyl ketone (MIBK) | 0.80 | 17.2 |
| ethanol | 0.79 | 26.0 |
| acetone | 0.79 | 20.3 |
| acetonitrile | 0.79 | 24.3 |

Experimental Method. Lacquer systems were prepared by adding VERADEL™ A-304 P NT PES to 10 grams of solvent. The samples were prepared in 50 ml glass sample bottles with polypropylene screw capped lids. Each sample bottle was then placed in a shaking water bath at 65 °C for one hour. The samples were then removed from the water bath and examined at room temperature after standing for 30 minutes. Further examination was done after 16 hours standing at room temperature.

Results obtained using different unsubstituted cyclic ketones are summarized in Table 2. As shown, despite the chemical similarity of the solvents, the PES was only soluble in cyclopentanone

**Table 2: Example compositions.**

| **Ex**. | **Solvent (grams)** | **PES (grams)** | **PES (w/w %)** | **Observations** |
|---|---|---|---|---|
| EX-1 | Cyclopentanone (10 g) | 1 g | 9.1 % | Clear solution, gel after 1 day |
| EX-2 | Cyclopentanone (10 g) | 2 g | 16.1 % | Clear solution, gel after 1 day |
| EX-3 | Cyclopentanone (8 g) | 2 g | 20.0 % | Clear solution, gel after 1 day |
| CE-1 | Cyclohexanone (10 g) | 1 g | 9.1 % | Mostly undissolved |
| CE-2 | Cycloheptanone (10 g) | 1 g | 9.1 % | Did not dissolve |

The formulations EX-1, -2 and -3 were reheated at 60 °C and once more became clear solutions that were stable for around a day.

### Addition of Cosolvents.

Samples were prepared containing increasing amounts of a cosolvent. Each sample contained one gram of VERADEL polyethersulphone ex Solvay grade A-304 P NT lot M2025B in 10 grams of solvent (9.1 w/w%). The samples were prepared according to the Experimental Method.

As shown in Table 3, not only is the presence of a linear aliphatic ketone not required to obtain solubility of PES in cyclopentanone, but it also can result in insolubility.

**Table 3: Effects in adding a cosolvent.**

| **Ex**. | **Cosolvent (wt**.% **of total solvent)** | **Observation at 30 minutes** | **Observation at 16 hours** |
|---|---|---|---|
| EX-4 | None | Clear solution | Clear solution |
| EX-5 | MEK (5 wt.%) | Clear solution | Clear solution |
| EX-6 | MEK (10 wt.%) | Clear solution | Clear solution |
| EX-7 | MEK (20 wt.%) | Clear solution | Clear solution |
| CE-3 | MEK (30 wt.%) | Turbid solution | Turbid solution |
| EX-8 | MIBK (5 wt.%) | Clear solution | Clear solution |
| CE-4 | MIBK (20 wt.%) | Turbid solution over swollen undissolved layer | Turbid solution over swollen undissolved layer |
| EX-9 | None | Clear solution | Not tested |
| EX-10 | Ethanol (5 wt.%) | Clear solution | Not tested |
| EX-11 | Ethanol (10 wt.%) | Clear solution | Not tested |
| CE-5 | Ethanol (20 wt.%) | Turbid solution over swollen undissolved layer | Not tested |
| CE-6 | Ethanol (30 wt.%) | Turbid solution over swollen undissolved layer | Not tested |

Table 4 is summary of the Hildebrand Solubility Parameter and PES solubility results for samples that included cyclopentanone in the composition.

**Table 4: Relative solubility of PES in solvent comprising cyclopentanone.**

| Vol% (*) cyclopentanone | HSP (**) MPa^{0.5} | wt.% PES | Visual Observations | Relative Score | Comment |
|---|---|---|---|---|---|
| 66% | 22.9 | 9.1 | Turbid solution, undissolved PES | Fail | CE-6 |
| 77% | 22.4 | 9.1 | Turbid solution, undissolved PES | Fail | CE-5 |
| 88% | 21.9 | 9.1 | Full dissolution | Pass | EX-11 |
| 94% | 21.6 | 9.1 | Full dissolution | Pass | EX-10 |
| 100% | 21.3 | 9.1 | Full dissolution | Pass | EX-1 |
| 100% | 21.3 | 16.1 | Full dissolution | Pass | EX-2 |
| 100% | 21.3 | 20.0 | Full dissolution | Pass | EX-3 |
| 100% | 21.3 | 9.1 | Full dissolution | Pass | EX-4 |
| 94% | 21.2 | 9.1 | Full dissolution | Pass | EX-5 |
| 94% | 21.1 | 9.1 | Full dissolution | Pass | EX-8 |
| 88% | 21.0 | 9.1 | Full dissolution | Pass | EX-6 |
| 77% | 20.8 | 9.1 | Full dissolution | Pass | EX-7 |
| 66% | 20.5 | 9.1 | Turbid solution, undissolved PES | Fail | CE-3 |
| 77% | 20.4 | 9.1 | Turbid solution, undissolved PES | Fail | CE-4 |

| | | | | | |
|---|---|---|---|---|---|
| * Volume percent based on the total volume of solvent ** Value calculated for solvent mixtures | | | | | |

Further experiments were performed exploring whether solubility parameter alone is sufficient to achieve solubility of PES. In particular, cyclopentanone has a Hildebrand Solubility Parameter (HSP) of 21.3 MPa^{1/2}. Solvent systems having a Hildebrand Solubility Parameter near this value were prepared. These systems used a variety of solvents including cyclohexanone, which is expected to be similar to cyclopentanone. As shown, despite the chemical similarity, poor solubility was achieved even at substantially the same Hildebrand Solubility Parameter.

### Comparative Example CE-5: Using a mixture of cyclohexanone and ethanol.

Cyclohexanone: HSP = 20.3 MPa^{1/2}, density = 0.95 g/ml
Ethanol: HSP = 26.0 MPa^{1/2}, density = 0.79 g/ml

The combination of 8.5 g cyclohexanone with 1.5 g of ethanol yields a solvent system with a calculated HSP of 21.3 MPa^{1/2}.

### Comparative Example CE-6: Using a mixture of cyclohexanone and acetonitrile.

Cyclohexanone: HSP = 20.3 MPa^{1/2}, density = 0.95 g/ml
Acetonitrile HSP = 24.3 MPa^{1/2}, density = 0.79 g/ml

The combination of 7.8 g cyclohexanone with 2.2 g of acetonitrile yields a solvent system with a calculated HSP of 21.3 MPa^{1/2}.

### Comparative Example CE-7: Using a mixture of acetone and acetonitrile.

Acetone: HSP = 20.3 MPa^{1/2}, density = 0.79 g/ml
Acetonitrile HSP = 24.3 MPa^{1/2}, density = 0.79 g/ml

The combination of 7.5 g acetone with 2.5 g of acetonitrile yields a solvent system with a calculated HSP of 21.3 MPa^{1/2}.

Compositions were prepared by combining 1 gram of PES (VERADEL™ A-304 P NT PES) to 10 grams of solvent according to the Experimental Method. The solvent systems and results are summarized in Table 5. As shown, despite matching the solubility parameter of cyclopentanone, these solvent systems failed to dissolve the PES.

**Table 5: Summary of Results**

| **Ex**. | **Solvent mixture** | **Observation at 30 minutes** | **Observation at 16 hours** |
|---|---|---|---|
| CE-5 | Cyclohexanone (8.5g) | Very turbid solution over undissolved layer | Very turbid solution over undissolved layer |
| | Ethanol(1.5g) | | |
| CE-6 | Cyclohexanone (7.84g) | Very turbid solution over undissolved layer | Very turbid solution over undissolved layer |
| | Acetonitrile (2.16g) | | |
| CE-7 | Acetone (7.51g) | No solubility evident | No solubility evident |
| | Acetonitrile (2.49g) | | |

### Representative Embodiments.

1. A composition comprising polyethersulphone and a solvent, wherein the polyethersulphone is in solution in the solvent, wherein the solvent comprises at least 70% by volume cyclopentanone, based on the total volume of solvent.
2. The composition as described in embodiment 1, wherein the solvent comprises cyclopentanone in an amount of greater than 90 % by volume, based on the total volume of solvent.
3. The composition as described in any of the preceding embodiments, wherein the solvent comprises less than 5 volume % of a linear aliphatic ketone, based on the total volume of solvent.
4. The composition as described in any of the preceding embodiments, wherein the solvent has a Hildebrand Solubility Parameter at 25 °C of greater than 20.5 MPa^{0.5}.
5. The composition as described in any of the preceding embodiments, wherein the solvent has a Hildebrand Solubility Parameter at 25 °C of at least 21 MPa^{0.5}.
6. The composition as described in any of the preceding embodiments, wherein the solvent has a Hildebrand Solubility Parameter at 25 °C of less than 22.4 MPa^{0.5}.
7. The composition as described in any of the preceding embodiments, wherein the solvent has a Hildebrand Solubility Parameter at 25 °C of no greater than 22 MPa^{0.5}.
8. The composition as described in any of the preceding embodiments, wherein the solvent has a Hildebrand Solubility Parameter at 25 °C of at least 21 MPa^{0.5} and no greater than 22 MPa^{0.5}.
9. The composition as described in any of the preceding embodiments, wherein the polyethersulphone is in solution in the solvent in an amount of at least 9 weight %, based on the total weight of the composition.
10. The composition as described in any of the preceding embodiments, wherein the polyethersulphone is in solution in the solvent in an amount of less than 20 weight %, based on the total weight of the composition.
11. A method for applying a composition to a substrate, the method comprising
   contacting a surface of a substrate with the composition as described in any of the preceding embodiments, and
   removing at least a portion of the solvent.
12. The method for coating a substrate as described in embodiment 11, the method comprising providing a casting medium as the substrate, contacting a surface of the casting medium with the composition as described in any one of embodiments 1 to 10, drying the composition to remove at least a portion of the solvent and, optionally removing the casting medium.
13. An article prepared by the method described in any one of embodiments 11 and 12.

It is to be understood that the specification is not limited to the embodiments described above and that various modifications can be made without departing from the principles or concepts of the specification.

Polyethersulphone compositions and coatings as disclosed in the specification may include any feature described herein separately or in combination with any other feature(s), if necessary with appropriate modification of other features, as would be readily apparent to the skilled person.

## Claims

1. A composition comprising polyethersulphone and a solvent, wherein the polyethersulphone is in solution in the solvent, wherein the solvent comprises at least 70% by volume cyclopentanone, based on the total volume of solvent.

2. The composition as claimed in claim 1, wherein the solvent comprises cyclopentanone in an amount of greater than 90% by volume, based on the total volume of solvent.

3. The composition as claimed in any one of the preceding claims, wherein the solvent comprises less than 5 volume % of a linear aliphatic ketone, based on the total volume of solvent.

4. The composition as claimed in any one of the preceding claims, wherein the solvent has a Hildebrand Solubility Parameter at 25 °C of greater than 20.5 MPa^{0.5}.

5. The composition as claimed in any one of the preceding claims, wherein the solvent has a Hildebrand Solubility Parameter at 25 °C of at least 21 MPa^{0.5}.

6. The composition as claimed in any one of the preceding claims, wherein the solvent has a Hildebrand Solubility Parameter at 25 °C of less than 22.4 MPa^{0.5}.

7. The composition as claimed in any one of the preceding claims, wherein the solvent has a Hildebrand Solubility Parameter at 25 °C of no greater than 22 MPa^{0.5}.

8. The composition as claimed in any one of the preceding claims, wherein the solvent has a Hildebrand Solubility Parameter at 25 °C of at least 21 MPa^{0.5} and no greater than 22 MPa^{0.5}.

9. The composition as claimed in any one of the preceding claims, wherein the polyethersulphone is in solution in the solvent in an amount of at least 9 weight %, based on the total weight of the composition.

10. The composition as claimed in any one of the preceding claims, wherein the polyethersulphone is in solution in the solvent in an amount of less than 20 weight %, based on the total weight of the composition.

11. A method for applying a composition to a substrate, the method comprising
contacting a surface of a substrate with the composition as claimed in any one of the preceding claims, and
removing at least a portion of the solvent.

12. The method for coating a substrate as claimed in claim 11, the method comprising providing a casting medium as the substrate, contacting a surface of the casting medium with the composition as claimed in any one of claims 1 to 10, drying the composition to remove at least a portion of the solvent and, optionally removing the casting medium.

13. An article prepared by the method according to any one of claims 11 and 12.
